# EUROPEAN PATENT SPECIFICATION

(11) **EP 4 507 444 B1**
(45) Date of publication and mention of the grant of the patent: **02.09.2026**
(21) Application number: 22941194.7
(22) Date of filing: 13.05.2022
(51) Int. Cl.: H04W 76/15, H04W 76/19, H04W 88/04, H04W 92/18

(54) **CONNECTION CONFIGURATION METHOD AND TERMINAL**
VERBINDUNGSKONFIGURATIONSVERFAHREN UND ENDGERÄT
PROCÉDÉ DE CONFIGURATION DE CONNEXION ET TERMINAL

(43) Date of publication of application: 12.02.2025
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); ZHANG, Boyuan, Dongguan, Guangdong 523860 (CN)
(74) Representative: RGTH
(86) International application number: PCT/CN2022/092741
(87) International publication number: WO 2023/216242

(56) References cited:
- EP-A1- 4 380 208
- WO-A1-2019/028811
- WO-A1-2022/042146
- CN-A- 114 172 895
- US-A1- 2021 377 842
- ZTE CORPORATION ET AL: "Discussion on remaining issues on service continuity", vol. RAN WG2, no. electronic; 20220117 - 20220126, 11 January 2022 (2022-01-11), XP052094447, Retrieved from the Internet <URL:https://ftp.3gpp.org/tsg_ran/WG2_RL2/TSGR2_116bis-e/Docs/R2-2201346.zip R2-2201346 Discussion on remaining issues on service continuity.doc> [retrieved on 20220111]
- QUALCOMM INCORPORATED: "Remaining issues on service continuity of L2 U2N relay", vol. RAN WG2, no. E-Conference; 20220221 - 20220303, 14 February 2022 (2022-02-14), XP052110225, Retrieved from the Internet <URL:https://ftp.3gpp.org/tsg_ran/WG2_RL2/TSGR2_117-e/Docs/R2-2202185.zip R2-2202185 - Remaining issues on service continuity of L2 U2N relay.doc> [retrieved on 20220214]
- CATT: "Service Continuity for L2 U2N Relay", 3GPP TSG-RAN WG2 MEETING #116-E R2-2109509, 22 October 2021 (2021-10-22), XP052065995
- HUAWEI, HISILICON: "Summary of [AT116-e][626][Relay] Direct-to-indirect path switch (Huawei)", 3GPP TSG-RAN WG2 MEETING #116 ELECTRONIC, R2-2111380, 11 November 2021 (2021-11-11), XP052075798

## Description

### TECHNICAL FIELD

This application relates to the communications field, and more specifically, to a connection configuration method and a terminal.

### BACKGROUND

With the development of wireless communications technologies, a layer-2 terminal-to-network relay (Relay) is introduced into the 3rd generation partnership project (3rd Generation Partnership Project, 3GPP).In a relay system, a remote terminal may be connected to a network through a direct connection path, or through an indirect connection path, for example, through a relay terminal. The remote terminal communicates with the network by using the relay terminal, which may extend a communication distance and improve communication reliability. Path switching for a single path in the relay system may include switching from a direct connection path to an indirect connection path, or switching from an indirect connection path to a direct connection path. WO2022/042146A1 relates to a communication method and device. The method comprises: receiving a first message from a network device, the first message being used to query whether a first terminal device can provide a relay service, or the first message comprising configuration information, the configuration information being used to configure the first terminal device to provide a relay service for a second terminal device; sending a second message to the network device; when the first message is used to query whether the first terminal device can provide a relay service, the second message is used to indicate whether the first terminal device can provide a relay service; or, when the first message comprises the configuration information, the second message is used to indicate whether configuration of the first terminal device is complete or to indicate whether the first terminal device can provide a relay service; and if the first terminal device rejects providing the relay service, since the network device can also know of said situation, the first terminal device does not need to enter an RRC re-establishment procedure and can continue to work normally under the network device, thereby improving the quality of service of the first terminal device.
According to "Discussion on remaining issues on service continuity", at RAN2#116e meeting, service continuity was extensively discussed and lots of agreements were reached.
According to "Remaining issues on service continuity of L2 U2N relay", WID of Sidelink relay (RP-210904) was agreed in RAN#91e.
According to US2021/377842A1, multiple communication paths are established for communications between a User Equipment (UE) and a wireless communication network, before switching between those paths is initiated. Signaling that includes an explicit indication that the UE is to switch between the multiple communication paths is transmitted to and received by at least the UE for which the multiple communication paths were established. Responsive to the explicit indication, communications are switched between the communication paths. At least one of the communication paths includes a relay path between the UE and the wireless communication network through another UE. Establishment of the multiple paths in advance of the switching may be useful in enabling fast switching with low latency and/or no traffic loss.

### SUMMARY

Embodiments of this application provide a connection configuration method and a terminal.

The invention is set out in the appended set of claims.

In embodiments of this application, in a scenario in which a terminal is connected to a network device through at least two paths, a connection configuration can be performed based on a timer, which enriches applicable connection configuration scenarios.

### BRIEF DESCRIPTION OF DRAWINGS

FIG. 1 is a schematic diagram of an application scenario according to an embodiment of this application.
FIG. 2 is a schematic diagram of a relay scenario according to an embodiment of this application.
FIG. 3 is a schematic flowchart of a connection configuration method according to an embodiment of this application.
FIG. 4 is a schematic flowchart of a connection configuration method according to another embodiment of this application.
FIG. 5 is a schematic flowchart of a connection configuration method according to another embodiment of this application.
FIG. 6 is a schematic block diagram of a remote terminal according to an embodiment of this application.
FIG. 7 is a schematic block diagram of a remote terminal according to another embodiment of this application.
FIG. 8 is a schematic block diagram of a remote terminal according to another embodiment of this application.
FIG. 9 is a flowchart illustrating a process in which a remote UE performs a connection configuration for a direct connection path according to an embodiment of this application.
FIG. 10 is a flowchart illustrating a process in which a remote UE performs a connection configuration for an indirect connection path according to an embodiment of this application.
FIG. 11 is a schematic block diagram of a communications device according to an embodiment of this application.
FIG. 12 is a schematic block diagram of a chip according to an embodiment of this application.
FIG. 13 is a schematic block diagram of a communications system according to an embodiment of this application.

### DESCRIPTION OF EMBODIMENTS

The following describes technical solutions in embodiments of this application with reference to the accompanying drawings for embodiments of this application.

The technical solutions in embodiments of this application may be applied to various communications systems, for example, a global system for mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long-term evolution (Long Term Evolution, LTE) system, an advanced long-term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Network, NTN) system, a universal mobile telecommunications system (Universal Mobile Telecommunications system, UMTS), a wireless local area network (Wireless Local Area Network, WLAN), wireless fidelity (Wireless Fidelity, WiFi), a fifth-generation (5th-Generation, 5G) system, or another communications system.

Generally, conventional communications systems support a limited quantity of connections and are also easy to implement. However, with the development of communications technologies, mobile communications systems will not only support conventional communication, but will also support, for example, device-to-device (Device to Device, D2D) communication, machine-to-machine (Machine to Machine, M2M) communication, machine-type communication (Machine Type Communication, MTC), vehicle-to-vehicle (Vehicle to Vehicle, V2V) communication, or vehicle-to-everything (Vehicle to everything, V2X) communication. Embodiments of this application may also be applied to these communications systems.

Optionally, the communications system in embodiments of this application may be applied to a carrier aggregation (Carrier Aggregation, CA) scenario, a dual connectivity (Dual Connectivity, DC) scenario, or a standalone (Standalone, SA) networking scenario.

Optionally, the communications system in embodiments of this application may be applied to an unlicensed spectrum, where the unlicensed spectrum may also be considered as a shared spectrum; or the communications system in embodiment of this application may be applied to a licensed spectrum, where the licensed spectrum may also be considered as a non-shared spectrum.

Embodiments of this application are described with reference to a network device and a terminal device. The terminal device may also be referred to as user equipment (User Equipment, UE), an access terminal, a user unit, a user station, a mobile site, a mobile station, a distant station, a remote terminal, a mobile device, a user terminal, a terminal, a wireless communications device, a user proxy, a user apparatus, or the like.

The terminal device may be a station (STATION, ST) in a WLAN, a cellular phone, a cordless phone, a session initiation system (Session Initiation Protocol, SIP) phone, a wireless local loop (Wireless Local Loop, WLL) station, a personal digital processing (Personal Digital Assistant, PDA) device, a handheld device with a wireless communication function, a computing device or another processing device connected to a wireless modem, a vehicle-mounted device, a wearable device, a terminal device in a next-generation communications system such as an NR network, a terminal device in a future evolved public land mobile network (Public Land Mobile Network, PLMN), or the like.

In embodiments of this application, the terminal device may be deployed on land, including being indoors or outdoors, or may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (Mobile Phone), a tablet computer (Pad), a computer with wireless sending and receiving functions, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

By way of example, rather than limitation, in embodiments of this application, the terminal device may alternatively be a wearable device. The wearable device may also be referred to as a smart wearable device. It is a general term for wearable devices that are intelligently designed and developed for daily wearing using wearable technologies, such as glasses, gloves, watches, clothes, and shoes. The wearable device is a portable device that can be directly worn on the body or integrated into the user's clothes or accessories. The wearable device is not only a hardware device, but also realizes powerful functions through software support, data exchange, and cloud interaction. In a broad sense, the wearable smart device includes a full-featured and large-sized device that can implement some or all of functions without relying on a smartphone, for example, a smart watch or smart glasses, and a device that only focuses on a specific type of application function and needs to cooperate with another device such as a smartphone, for example, various smart bracelets and smart jewelries for physical sign monitoring.

In embodiments of this application, the network device may be a device for communicating with a mobile device. The network device may be an access point (Access Point, AP) in a WLAN, a base transceiver station (Base Transceiver Station, BTS) in GSM or CDMA, a NodeB (NodeB, NB) in WCDMA, an evolved NodeB (Evolutional NodeB, eNB or eNodeB) in LTE, a relay station or an access point, a vehicle-mounted device, a wearable device, a network device (gNB) in an NR network, a network device in a future evolved PLMN network, a network device in an NTN network, or the like.

By way of example, rather than limitation, in embodiments of this application, the network device may have a mobile feature. For example, the network device may be a movable device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite. Optionally, the network device may alternatively be a base station deployed on land, water, or the like.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (Small cell). The small cell herein may include: a metro cell (Metro cell), a micro cell (Micro cell), a pico cell (Pico cell), a femto cell (Femto cell), or the like. These small cells have features of a small coverage range and low transmit power, and are suitable for providing a high-rate data transmission service.

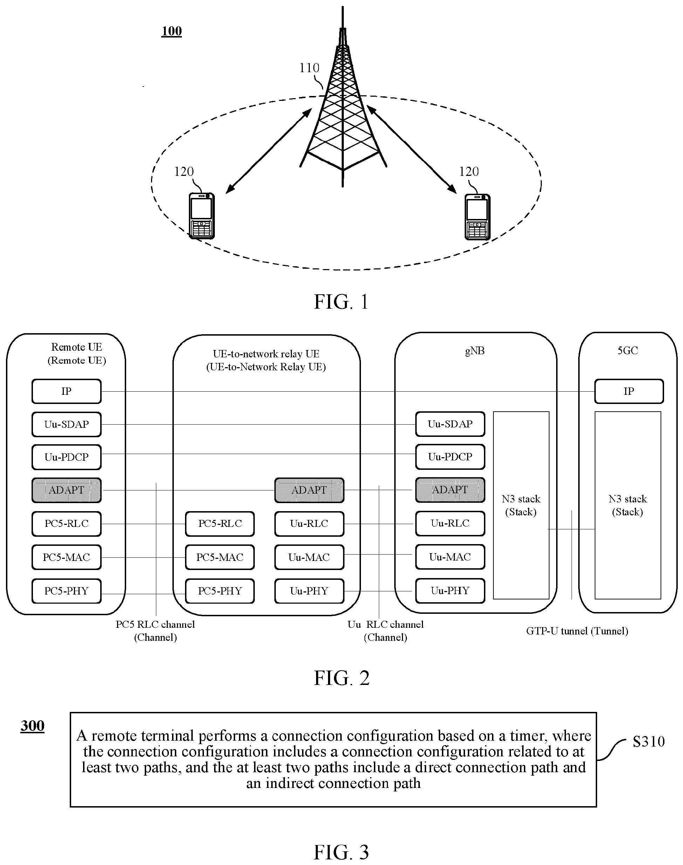

FIG. 1 illustratively shows a communications system 100. The communications system 100 includes one network device 110 and two terminal devices 120. Optionally, the communications system 100 may include a plurality of network devices 110, and a coverage range of each network device 110 may include another quantity of terminal devices 120. This is not limited in embodiments of this application.

Optionally, the communications system 100 may further include another network entity such as a mobility management entity (Mobility Management Entity, MME) or an access and mobility management function (Access and Mobility Management Function, AMF). This is not limited in embodiments of this application.

The network device may further include an access network device and a core network device. In other words, the wireless communications system further includes a plurality of core networks for communicating with the access network device. The access network device may be an evolved NodeB (evolutional node B, which may be referred to as an eNB or an e-NodeB for short), a macro base station, a micro base station (also referred to as a "small base station"), a pico base station, an access point (access point, AP), a transmission point (transmission point, TP), or a new generation NodeB (new generation Node B, gNodeB), or the like in a long-term evolution (long-term evolution, LTE) system, a next-generation (mobile communications system) (next radio, NR) system, or an authorized auxiliary access long-term evolution (authorized auxiliary access long-term evolution, LAA-LTE) system.

It should be understood that a device having a communication function in a network/system in embodiments of this application may be referred to as a communications device. The communications system shown in FIG. 1 is used as an example. The communications device may include a network device and a terminal device that have a communication function. The network device and the terminal device may be specific devices in embodiments of this application. Details are not described herein again. The communications device may further include another device in the communications system, for example, another network entity such as a network controller or a mobility management entity. This is not limited in embodiments of this application.

It should be understood that the terms "system" and "network" may often be used interchangeably in this specification. The term "and/or" in this specification describes merely an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

It should be noted that, an "indication" mentioned in embodiments of this application may be a direct indication or an indirect indication, or may indicate the presence of an association relationship. For example, that A indicates B may mean that A directly indicates B, for example, B can be obtained based on A; or may mean that A indirectly indicates B, for example, A indicates C, and B can be obtained based on C; or may mean that there is an association relationship between A and B.

In description of embodiments of this application, the term "corresponding" may mean that there is a direct or indirect correspondence between the two, or may mean that there is an association relationship between the two, which may also be a relationship such as indicating and being indicated, or configuring and being configured.

To facilitate an understanding of the technical solutions of embodiments of this application, the related technologies of embodiments of this application are described below. The following related technologies, as optional solutions, can be arbitrarily combined with the technical solutions of embodiments of this application, and the combination thereof all belong to the scope of protection of embodiments of this application.

A layer-2 terminal-to-network relay is introduced into the 3GPP Rel-17. An adaptation layer is placed at a Uu interface (air interface) between relay UE and a gNB, and above control-plane and user-plane radio link control (Radio Link Control, RLC) sublayers. A service data adaptation protocol (Service Data Adaptation Protocol, SDAP)/packet data convergence protocol (Packet Data Convergence Protocol, PDCP) and radio resource control (Radio Resource Control, RRC) of the Uu interface end between the remote terminal and the gNB. The RLC, medium access control (Medium Access Control, MAC), and a physical sublayer (Physical Layer, PHY) end on each link (for example, a link between the remote terminal and the relay terminal, and a link between the relay terminal and the gNB). Refer to FIG. 2. Whether the adaptation layer is also supported at the PC5 interface between the remote UE and the relay UE is left for a work item (Work item, WI) phase.

For the L2 UE-to-network relay, features of an uplink include the following:
A Uu adaptation layer of the relay terminal supports uplink bearer mapping between PC5 RLC channels and mapping to a Uu RLC channel on a Uu path of the relay UE. For a relay service of an uplink, different end-to-end bearers (for example, signalling radio bearers (Signalling Radio Bearers, SRB), or data radio bearers (Data Radio Bearers, DRB)) of same remote UE and/or different remote UE can support N:1 mapping and data multiplexing on one Uu RLC channel.

The Uu adaptation layer is used to support an identification of a remote terminal of an uplink service (multiplexing of data from a plurality of remote terminals). A Uu radio bearer of the remote terminal and identification information of the remote terminal are included in an uplink Uu adaptation layer, so that the gNB associates a received data packet of a specific PDCP entity associated with the Uu radio bearer of the remote terminal.

For the L2 UE-to-network relay, features of a downlink include the following:
The Uu adaptation layer may be used to support downlink bearer mapping at the gNB to map an end-to-end radio bearer (an SRB or a DRB) of the remote terminal to a Uu RLC channel through a Uu path of the relay UE. The Uu adaptation layer may be used to support downlink N:1 bearer mapping and data multiplexing between a plurality of end-to-end radio bearers (for example, SRBs or DRBs) of the remote terminal and/or different remote terminals and one Uu RLC channel on the Uu path of the relay UE.

The Uu adaptation layer needs to support an identification of a remote terminal of a downlink service. The identity information of the Uu radio bearer of the remote terminal and the identification information of the remote terminal need to be placed in the Uu adaptation layer by the gNB on the downlink, so that the relay UE maps a data packet received over the Uu radio bearer of the remote terminal to a PC5 RLC channel related thereto.

In related technologies, the following can be processed: An RRC connection is established, reestablished, or restored when the UE is only directly connected to a network; and an RRC connection is established, reestablished, or restored when the UE is only connected to the network through relay (relay) UE. However, it is not resolved how to establish, reestablish, or restore an RRC connection in a multi-path relay system when the remote UE is directly connected to the network and also connected to the network through relay UE.

In the related technologies, the following can be processed: a switching process may be processed based on a timer when the UE is only switched from a direct connection to an indirect connection; or a switching process may be processed based on a timer when the UE is only switched from an indirect connection to a direct connection. However, for switching in the multi-path relay system, for example, the remote UE being configured to switch from a single path to a plurality of paths, or being configured to switch from a plurality of paths to a single path, or being configured to switch from a plurality of paths to a plurality of paths, it is not clear how to process a connection configuration process based on a timer.

FIG. 3 is a schematic flowchart of a connection configuration method 300 according to an embodiment of this application. Optionally, the method may be applied to the system shown in FIG. 1, but is not limited thereto. The method includes at least a part of the following content.

S310: A remote terminal performs a connection configuration based on a timer, where the connection configuration includes a connection configuration related to at least two paths, and the at least two paths include a direct connection path and an indirect connection path.

In this embodiment of this application, the remote terminal may be connected to a network device through a single path. For example, the remote terminal is connected to the network device through only a direct connection path. For another example, the remote terminal is connected to the network device through only an indirect connection path, for example, the remote terminal is connected to the network device through a relay terminal. The remote terminal may alternatively be connected to a network device through a plurality of paths. For example, the remote terminal is connected to the network device through a direct connection path and an indirect connection path. That the remote terminal performs the connection configuration may include processing such as adding, deleting, releasing, or switching of a path between the remote terminal and the network device. Before the connection configuration is performed, a connection between the remote terminal and the network device may include an original direct connection path and/or an original indirect connection path. After the connection configuration is performed, the connection between the remote terminal and the network device may include a target direct connection path and/or a target indirect connection path. If the connection between the remote terminal and the network device before the connection configuration is performed includes at least two paths, or the connection between the remote terminal and the network device after the connection configuration is performed includes at least two paths, or an original path includes at least two paths and a target path includes at least two paths, the connection configuration belongs to a multi-path connection configuration.

In this embodiment of this application, the remote terminal may set a timer for timing a connection configuration process. The remote terminal may perform the connection configuration based on the timer. For example, the timer is started or restarted when the multi-path connection configuration starts to be performed, and the timer is in a running state in the connection configuration process. If the timer stops or expires, it may be determined that the connection configuration process fails, and a related failure processing operation is performed.

In a possible implementation, the connection configuration includes a first connection configuration. After the first connection configuration is performed, the remote terminal is connected to the network device through at least a direct connection path, and the timer includes a first timer.

In this embodiment of this application, the connection configuration may include the first connection configuration and a second connection configuration, depending on a path status after the connection configuration. After the remote terminal may perform the first connection configuration based on the first timer, a target path connecting the network device and the remote terminal includes at least a direct connection path. In other words, after the first connection configuration is performed, the remote terminal is connected to the network device through at least the direct connection path. In this embodiment of this application, an original direct connection path before the first connection configuration is performed may be the same as or different from a target direct connection path after the first connection configuration is performed. An original indirect connection path before the first connection configuration is performed may be the same as or different from a target indirect connection path after the first connection configuration is performed.

In this embodiment of this application, the remote terminal may perform the first connection configuration based on the first timer. For example, when performing the first connection configuration, the remote terminal starts or restarts the first timer.

In a possible implementation, the network device before the connection configuration is performed is a first network device, and the network device after the connection configuration is performed is a second network device. The first network device is a source network device, and the second network device is a target network device. The source network device may be the same as or different from the target network device.

In a possible implementation, the first network device and the second network device are the same cell, the same cell group, or the same device.

In a possible implementation, the first network device and the second network device are different cells, different cell groups, or different devices.

In this embodiment of this application, the original direct connection path before the first connection configuration is performed may be a first direct connection path, and the target direct connection path after the first connection configuration is performed may be the first direct connection path or a second direct connection path. The first direct connection path is different from the second direct connection path. The original indirect connection path after the first connection configuration is performed may be a first indirect connection path, and the target indirect connection path may be the first indirect connection path or a second indirect connection path. The first indirect connection path is different from the second indirect connection path.

In a possible implementation, the first connection configuration includes that being connected to the first network device through the first indirect connection path is configured as being connected to the second network device through the second direct connection path and the second indirect connection path.

Example 1-1: The remote terminal may switch from being connected to the first network device through the first indirect connection path to being connected to the second network device through the second indirect connection path, and be additionally connected to the second network device through the second direct connection path.

In a possible implementation, a master cell of the remote terminal is located on the second direct connection path or the second indirect connection path.

For example, in Example 1-1, the master cell of the remote terminal may be changed from being located on the first indirect connection path before the connection configuration is performed, to being located on the second direct connection path or the second indirect connection path after the connection configuration is performed.

In a possible implementation, the first connection configuration includes that being connected to the first network device through the first direct connection path is configured as being connected to the second network device through the first direct connection path and the second indirect connection path.

Example 1-2: If the first network device is the same as the second network device, the remote terminal may maintain the connection to the network device through the first direct connection path, and be additionally connected to the network device through the second indirect connection path. If the first network device is different from the second network device, the remote terminal may switch from being connected to the first network device through the first direct connection path to being connected to the second network device through the first direct connection path, and be additionally connected to the second network device through the second indirect connection path.

In a possible implementation, the first connection configuration includes that being connected to the first network device through the first direct connection path is configured as being connected to the second network device through the second direct connection path and the second indirect connection path.

Example 1-3: The remote terminal may switch from being connected to the first network device through the first direct connection path to being connected to the second network device through the second direct connection path, and be additionally connected to the second network device through the second indirect connection path.

In a possible implementation, a master cell of the remote terminal is changed from being on the first direct connection path to being on the second indirect connection path.

For example, in Example 1-2 or Example 1-3, the master cell of the remote terminal may be changed from being located on the first direct connection path before the connection configuration is performed, to being located on the second indirect connection path after the connection configuration is performed.

In a possible implementation, the first connection configuration includes that being connected to the first network device through the first indirect connection path and the first direct connection path is configured as being connected to the second network device through the first direct connection path.

Example 1-4: If the first network device is the same as the second network device, the remote terminal may maintain the connection to the network device through the first direct connection path, and the remote terminal may release the first indirect connection path. If the first network device is different from the second network device, the remote terminal may switch from being connected to the first network device through the first direct connection path and the first indirect connection path to being connected to the second network device through the first direct connection path, and the remote terminal may release the first indirect connection path.

In a possible implementation, a master cell of the remote terminal is changed from being on the first indirect connection path to being on the first direct connection path.

For example, in Example 1-4, the master cell of the remote terminal may be changed from being located on the first indirect connection path before the connection configuration is performed, to being located on the first direct connection path after the connection configuration is performed.

In a possible implementation, the first connection configuration includes that being connected to the first network device through the first indirect connection path and the first direct connection path is configured as being connected to the second network device through the second direct connection path.

Example 1-5: The remote terminal may switch from being connected to the first network device through the first indirect connection path and the first direct connection path to being connected to the second network device through the second direct connection path, and the remote terminal may release the first indirect connection path.

In a possible implementation, a master cell of the remote terminal is changed from being on the first indirect connection path to being on the second direct connection path.

For example, in Example 1-5, the master cell of the remote terminal may be changed from being located on the first indirect connection path before the connection configuration is performed, to being located on the second direct connection path after the connection configuration is performed.

In a possible implementation, the first connection configuration includes that being connected to the first network device through the first indirect connection path and the first direct connection path is configured as being connected to the second network device through the first indirect connection path and the first direct connection path.

Example 1-6: If the first network device is the same as the second network device, the remote terminal may maintain the connection to the network device through the first indirect connection path and the first direct connection path. If the first network device is different from the second network device, the remote terminal may switch from being connected to the first network device through the first indirect connection path and the first direct connection path to being connected to the second network device through the first indirect connection path and the first direct connection path.

In a possible implementation, the first connection configuration includes that being connected to the first network device through the first indirect connection path and the first direct connection path is configured as being connected to the second network device through the second indirect connection path and the first direct connection path.

Example 1-7: If the first network device is same as the second network device, the remote terminal may switch from being connected to the network device through the first indirect connection path to being connected to the network device through the second indirect connection path, and maintain a connection to the network device through the first direct connection path. If the first network device is different from the second network device, the remote terminal may switch from being connected to the first network device through the first indirect connection path and the first direct connection path to being connected to the second network device through the second indirect connection path and the first direct connection path.

In a possible implementation, a master cell of the remote terminal is changed from being on the first indirect connection path to being on the first direct connection path.

For example, in Example 1-6 or Example 1-7, the master cell of the remote terminal may be changed from being located on the first indirect connection path before the connection configuration is performed, to being located on the first direct connection path after the connection configuration is performed.

In a possible implementation, the first connection configuration includes that being connected to the first network device through the first indirect connection path and the first direct connection path is configured as being connected to the second network device through the first indirect connection path and the second direct connection path.

Example 1-8: If the first network device is same as the second network device, the remote terminal may maintain a connection to the network device through the first indirect connection path, and switch from being connected to the network device through the first direct connection path to being connected to the network device through the second direct connection path. If the first network device is different from the second network device, the remote terminal may switch from being connected to the first network device through the first indirect connection path and the first direct connection path to being connected to the second network device through the first indirect connection path and the second direct connection path.

In a possible implementation, the first connection configuration includes that being connected to the first network device through the first indirect connection path and the first direct connection path is configured as being connected to the second network device through the second indirect connection path and the second direct connection path.

Example 1-9: The remote terminal may switch from being connected to the first network device through the first indirect connection path and the first direct connection path to being connected to the second network device through the second indirect connection path and the second direct connection path.

In a possible implementation, a master cell of the remote terminal is changed from being located on the first indirect connection path to the second direct connection path.

For example, in Example 1-8 or Example 1-9, the master cell of the remote terminal may be changed from being located on the first indirect connection path before the connection configuration is performed, to being located on the second direct connection path after the connection configuration is performed.

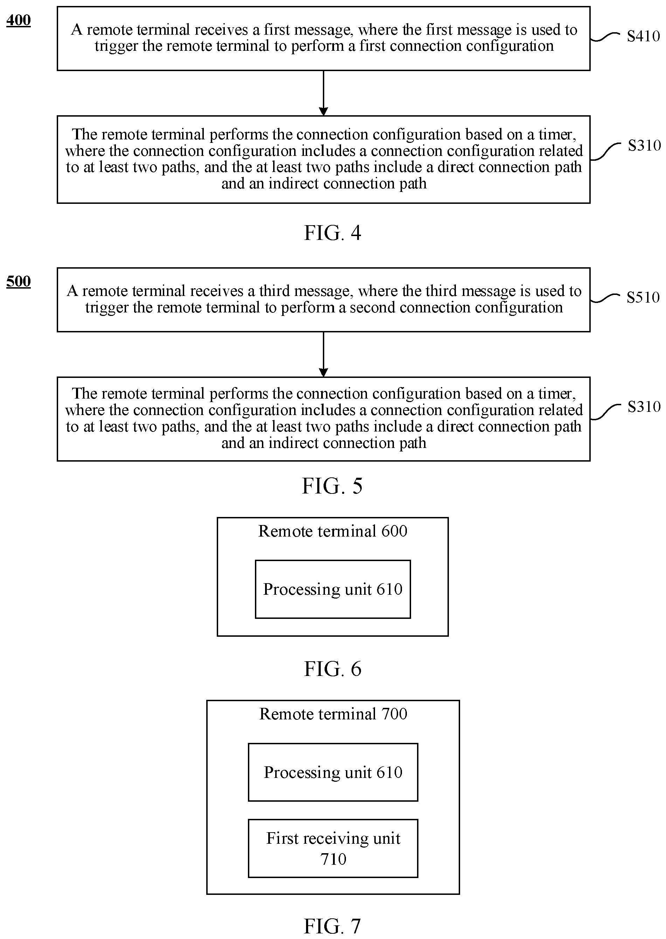

In a possible implementation, as shown in FIG. 4, the method further includes the following step.

S410: The remote terminal receives a first message, where the first message is used to trigger the remote terminal to perform the first connection configuration.

In this embodiment of this application, the remote terminal receives the first message from the network device, and the remote terminal is triggered based on the first message to perform the first connection configuration, so that the remote terminal after the first connection configuration is connected to the network device through at least a direct connection path. An original path and/or a target path in the first connection configuration may include at least two paths. A process of the first connection configuration includes a process of a multi-path connection configuration.

In a possible implementation, the first message is further used to start or restart the first timer.

In this embodiment of this application, the remote terminal may perform the first connection configuration in response to receiving the first message, and start or restart the first timer; or may perform the first connection configuration based on specific content of the first message, and start or restart the first timer.

In a possible implementation, the first message includes a first indication, and the first indication is used to indicate whether the remote terminal is to start or restart the first timer.

For example, if the first message includes the first indication, this indicates that the first timer needs to be started or restarted; or if the first message does not include the first indication, this indicates that the first timer does not need to be started or restarted. For another example, the first indication may include one or more indication bits. Different values thereof indicate whether to start or restart the first timer. That a value of the first indication is a first value indicates that the first timer needs to be started or restarted. That a value of the first indication is a second value or a null value indicates that the first timer does not need to be started or restarted.

In a possible implementation, the first message includes a second indication, and the second indication is used to indicate an identification of the first timer and/or an identification of a second timer used by the remote terminal.

In this embodiment of this application, the second indication may indicate a specific identification of the first timer and/or a specific identification of the second timer, for example, a name, a model, or the like. The second indication may further indicate operation duration, start time, and the like of the first timer and/or the second timer.

In a possible implementation, at least one of the first timer or the second timer is T304.

In this embodiment of this application, T304 may be a timer in a related standard. For example, the first timer is T304, and the second timer is another type of timer. For another example, the second timer is T304, and the first timer is another type of timer. For another example, both the first timer and the second timer are T304.

In a possible implementation, a condition of stopping the first timer includes at least one of the following:
that the remote terminal completes a random access procedure related to the second direct connection path, that is, a direct connection path after the connection configuration; or
that the remote terminal receives a second message from the network device, where the second message is used to instruct to release at least one of the following: the second direct connection path, a cell related to the second direct connection path, or a cell group related to the second direct connection path.

In this embodiment of this application, the started first timer may expire after preset operation duration, or the first timer may be stopped under a specific condition.

In a possible implementation, in a case that the first timer expires, the remote terminal performs at least one of the following:
an RRC connection reestablishment process; or
an error reporting process.

In this embodiment of this application, if the first timer expires, this may indicate that the remote terminal does not successfully complete a current connection configuration process. In this case, the remote terminal may perform the RRC connection reestablishment process, and maintain a connection to a network through reconnection. The remote terminal may alternatively perform the error reporting process, and report a result of the current connection configuration failure and/or a failure reason.

In a possible implementation, the error reporting process is triggered when a first condition is met.

In a possible implementation, the first condition includes at least one of the following:
that the remote terminal does not pause transmission on the first indirect connection path and/or the second indirect connection path;
that the remote terminal encounters no radio link failure (RLF) on the first indirect connection path and/or the second indirect connection path; or
that the second timer of the remote terminal is not in a running state.

In an embodiment of this application, the remote terminal may trigger the error reporting process based on a specific condition. For example, if the remote terminal does not pause transmission on the first indirect connection path before or after the connection configuration, or the remote terminal does not pause transmission on the second indirect connection path after the connection configuration. For another example, the remote terminal encounters no RLF on the first indirect connection path before the connection configuration or after the connection configuration, and the remote terminal encounters no RLF on the second indirect connection path after the connection configuration. For another example, the second timer for timing error reporting is set. If the second timer is in the running state, error reporting does not need to be performed. If the second timer is not in the running state, for example, is stopped, error reporting needs to be performed.

In a possible implementation, the second timer is triggered by a switching command or a signal quality indication. For example, the remote terminal receives a switching command or a signal quality indication from the network device, and the switching command or the signal quality indication may trigger the second timer to be started or restarted. The second timer may also be triggered in another manner. For example, when performing the first connection configuration, the remote terminal simultaneously starts the first timer and the second timer.

In an implementation, the connection configuration includes a second connection configuration. After the second connection configuration, the remote terminal is connected to the network device through at least an indirect connection path, and the timer includes a third timer.

In an embodiment of this application, after the remote terminal performs the second connection configuration based on the timer, the target path connecting the network device and the remote terminal includes at least an indirect connection path. In other words, after the second connection configuration, the remote terminal is connected to the network device through at least an indirect connection path. In an embodiment of this application, an original direct connection path before the second connection configuration is performed may be the same as or different from a target direct connection path after the second connection configuration is performed. An original indirect connection path before the second connection configuration is performed may be the same as or different from a target indirect connection path after the second connection configuration is performed.

In this embodiment of this application, the remote terminal may perform the second connection configuration based on the third timer. For example, when performing the second connection configuration, the remote terminal starts or restarts the third timer.

In this embodiment of this application, the original direct connection path before the second connection configuration is performed may be a first direct connection path, and the target direct connection path after the second connection configuration is performed may be the first direct connection path or the second direct connection path. The first direct connection path is different from the second direct connection path. The original indirect connection path before the second connection configuration is performed may be the first indirect connection path, and the target indirect connection path after the second connection configuration is performed may be the first indirect connection path or the second indirect connection path. The first indirect connection path is different from the second indirect connection path.

In a possible implementation, the second connection configuration includes that being connected to the first network device through the first direct connection path is configured as being connected to the second network device through the second direct connection path and the second indirect connection path.

Example 2-1: The remote terminal may switch from being connected to the first network device through the first direct connection path to being connected to the second network device through the second direct connection path, and be additionally connected to the second network device through the second indirect connection path.

In a possible implementation, a master cell of the remote terminal is located on the second direct connection path or the second indirect connection path.

For example, in Example 2-1, the master cell of the remote terminal may be changed from being located on the first direct connection path before the connection configuration is performed, to being located on the second direct connection path or the second indirect connection path after the connection configuration is performed.

In a possible implementation, the second connection configuration includes that being connected to the first network device through the first indirect connection path is configured as being connected to the second network device through the second direct connection path and the second indirect connection path.

Example 2-2: The remote terminal may switch from being connected to the first network device through the first indirect connection path to being connected to the second network device through the second indirect connection path, and be additionally connected to the second network device through the second direct connection path.

In a possible implementation, the second connection configuration includes that being connected to the first network device through the first indirect connection path configured as being connected to the second network device through the second direct connection path and the first indirect connection path.

Example 2-3: If the first network device is the same as the second network device, the remote terminal may maintain the connection to the first network device through the first indirect connection path. If the first network device is different from the second network device, the remote terminal may switch from being connected to the first network device through the first indirect connection path to being connected to the second network device through the second indirect connection path, and be additionally connected to the second network device through the second direct connection path.

In a possible implementation, a master cell of the remote terminal is changed from being on the first indirect connection path to being on the second direct connection path.

For example, in Example 2-2 or Example 2-3, the master cell of the remote terminal may be changed from being located on the first indirect connection path before the connection configuration is performed, to being located on the second direct connection path after the connection configuration is performed.

In a possible implementation, the second connection configuration includes that being connected to the first network device through the first indirect connection path and the first direct connection path is configured as being connected to the second network device through the second indirect connection path.

Example 2-4: The remote terminal may switch from being connected to the first network device through the first indirect connection path and the first direct connection path to being connected to the second network device through the second indirect connection path, and may release the first direct connection path.

In a possible implementation, a master cell of the remote terminal is changed from being on the first indirect connection path to being on the second indirect connection path.

For example, in Example 2-4, the master cell of the remote terminal may be changed from being located on the first indirect connection path before the connection configuration is performed, to being located on the second indirect connection path after the connection configuration is performed.

In a possible implementation, the second connection configuration includes that being connected to the first network device through the first indirect connection path and the first direct connection path is configured as being connected to the second network device through the first indirect connection path.

Example 2-5: If the first network device is the same as the second network device, the remote terminal may maintain the connection to the first network device through the first indirect connection path, and release the first direct connection path. If the first network device is different from the second network device, the remote terminal may switch from being connected to the first network device through the first indirect connection path and the first direct connection path to being connected to the second network device through the second indirect connection path, and release the first direct connection path.

In a possible implementation, a master cell of the remote terminal is changed from being located on the first direct connection path to the first indirect connection path.

For example, in Example 2-5, the master cell of the remote terminal may be changed from being located on the first direct connection path before the connection configuration is performed, to being located on the first indirect connection path after the connection configuration is performed.

In a possible implementation, the second connection configuration includes that being connected to the first network device through the first indirect connection path and the first direct connection path is configured as being connected to the second network device through the second indirect connection path and the second direct connection path.

Example 2-6: The remote terminal may switch from being connected to the first network device through the first indirect connection path and the first direct connection path to being connected to the second network device through the second indirect connection path and the second direct connection path.

In a possible implementation, the second connection configuration includes that being connected to the first network device through the first indirect connection path and the first direct connection path is configured as being connected to the second network device through the second indirect connection path and the first direct connection path.

Example 2-7: If the first network device is same as the second network device, the remote terminal may maintain a connection to the network device through the first direct connection path, and switch from being connected to the network device through the first indirect connection path to being connected to the network device through the second indirect connection path. If the first network device is different from the second network device, the remote terminal may switch from being connected to the first network device through the first indirect connection path and the first direct connection path to being connected to the second network device through the second indirect connection path and the first direct connection path.

In a possible implementation, a master cell of the remote terminal is changed from being on the first direct connection path to being on the second indirect connection path.

For example, in Example 2-6 or Example 2-7, the master cell of the remote terminal may be changed from being located on the first direct connection path before the connection configuration is performed, to being located on the second indirect connection path after the connection configuration is performed.

In a possible implementation, the second connection configuration includes that being connected to the first network device through the first indirect connection path and the first direct connection path is configured as being connected to the second network device through the first indirect connection path and the first direct connection path.

Example 2-8: If the first network device is the same as the second network device, the remote terminal may maintain the connection to the network device through the first indirect connection path and the first direct connection path. If the first network device is different from the second network device, the remote terminal may switch from being connected to the first network device through the first indirect connection path and the first direct connection path to being connected to the second network device through the first indirect connection path and the first direct connection path.

In a possible implementation, the second connection configuration includes that being connected to the first network device through the first indirect connection path and the first direct connection path is configured as being connected to the second network device through the first indirect connection path and the second direct connection path.

Example 2-9: If the first network device is the same as the second network device, the remote terminal may maintain the connection to the network device through the first indirect connection path, and be additionally connected to the network device through the second direct connection path. If the first network device is different from the second network device, the remote terminal may switch from being connected to the first network device through the first indirect connection path and the first direct connection path to being connected to the second network device through the first indirect connection path and the second direct connection path.

In a possible implementation, a master cell of the remote terminal is changed from being on the first direct connection path to being on the first indirect connection path.

For example, in Example 2-8 or Example 2-9, the master cell of the remote terminal may be changed from being located on the first direct connection path before the connection configuration is performed, to being located on the first indirect connection path after the connection configuration is performed.

In a possible implementation, as shown in FIG. 5, the method further includes the following step.

S510: The remote terminal receives a third message, where the third message is used to trigger the remote terminal to perform the second connection configuration.

In this embodiment of this application, the remote terminal receives the third message from the network device, and the remote terminal is triggered, based on the third message, to perform the second connection configuration, so that the remote terminal after the second connection configuration is connected to the network device through at least an indirect connection path. An original path and/or a target path in the second connection configuration may include at least two paths. A process of the second connection configuration includes a process of a multi-path connection configuration.

In a possible implementation, the third message is further used to start or restart the third timer.

In an embodiment of this application, the remote terminal may perform the second connection configuration in response to receiving third message, and start or restart the third timer; or may perform the second connection configuration based on specific content of the third message, and start or restart the third timer.

In a possible implementation, the third message includes a third indication, and the third indication is used to indicate whether the remote terminal is to start or restart the third timer.

For example, if the third message includes the third indication, this indicates that the third timer needs to be started or restarted; or if the third message does not include the third indication, this indicates that the third timer does not need to be started or restarted. For another example, the third indication may include one or more indication bits. Different values thereof indicate whether to start or restart the third timer. That a value of the third indication is a third value indicates that the third timer needs to be started or restarted. That a value of the third indication is a fourth value indicates that the third timer does not need to be started or restarted.

In a possible implementation, the third message includes a fourth indication, and the fourth indication is used to indicate an identification of the third timer and/or an identification of a fourth timer used by the remote terminal.

In an embodiment of this application, the fourth indication may indicate a specific identification of the third timer and/or a specific identification of the fourth timer, for example, a name, a model, or the like. The fourth indication may further indicate operation duration, start time, and the like of the third timer and/or the fourth timer.

In a possible implementation, at least one of the third timer or the fourth timer is T420.

In an embodiment of this application, T420 may be a timer in a related standard. For example, the third timer is T420, and the fourth timer is another type of timer. For another example, the fourth timer is T420, and the third timer is another type of timer. For another example, both the third timer and the fourth timer are T420.

In a possible implementation, a condition of stopping the third timer includes at least one of the following:
that the remote terminal receives a fourth message from a relay terminal, where the fourth message is a PC5-S message;
that the remote terminal receives a fifth message from a relay terminal, where the fifth message is a PC5-RRC message; or
that the remote terminal receives a sixth message from the network device, where the sixth message is used to instruct to release at least one of the following: the second indirect connection path, a cell related to the second indirect connection path, or a cell group related to the second indirect connection path.

In an embodiment of this application, the started third timer may expire after preset operation duration, or the third timer may be stopped under a specific condition.

In a possible implementation, the PC5-S message is sent by the relay terminal after the relay terminal receives a seventh message from the network device; or
the PC5-RRC message is sent by the relay terminal after the relay terminal receives an eighth message from the network device.

In an implementation, the method further includes that, in a case that the third timer expires, the remote terminal performs at least one of the following:
an RRC connection reestablishment process; or
an error reporting process.

In a possible implementation, the error reporting process is triggered when a second condition is met.

In an implementation, the second condition includes at least one of the following:
that the remote terminal does not pause transmission on the first direct connection path and/or the second direct connection path;
that the remote terminal encounters no RLF on the first direct connection path and/or the second direct connection path; or
that the fourth timer of the remote terminal is not in a running state.

In an embodiment of this application, the second condition that needs to be met when the error reporting process is triggered because the fourth timer expires is similar to the first condition that needs to be met when the error reporting process is triggered because the second timer expires. Reference may be made to the foregoing related description of the first condition. Details are not described herein again.

In a possible implementation, the fourth timer is triggered by a switching command or a signal quality indication. For example, the remote terminal receives a switching command or a signal quality indication from the network device, and the switching command or the signal quality indication may trigger the fourth timer to be started or restarted. The fourth timer may also be triggered in another manner. For example, when performing the second connection configuration, the remote terminal simultaneously starts the third timer and the fourth timer.

In embodiments of this application, in a scenario where a terminal is connected to a network device through at least two paths, a connection configuration can be performed based on a timer, which enriches the applicable connection configuration scenarios.

FIG. 6 is a schematic block diagram of a remote terminal 600 according to an embodiment of this application. The remote terminal 600 may include:
a processing unit 610, configured to perform a connection configuration based on a timer, where the connection configuration includes a connection configuration related to at least two paths, and the at least two paths include a direct connection path and an indirect connection path.

In a possible implementation, the connection configuration includes a first connection configuration. After the first connection configuration is performed, the remote terminal is connected to a network device through at least a direct connection path, and the timer includes a first timer.

In a possible implementation, the first connection configuration includes that being connected to a first network device through a first indirect connection path is configured as being connected to a second network device through a second direct connection path and a second indirect connection path.

In a possible implementation, a master cell of the remote terminal is located on the second direct connection path or the second indirect connection path.

In a possible implementation, the first connection configuration includes that being connected to a first network device through a first direct connection path is configured as being connected to a second network device through the first direct connection path and a second indirect connection path.

In a possible implementation, the first connection configuration includes that being connected to a first network device through a first direct connection path is configured as being connected to a second network device through a second direct connection path and a second indirect connection path.

In a possible implementation, a master cell of the remote terminal is changed from being on the first direct connection path to being on the second indirect connection path.

In a possible implementation, the first connection configuration includes that being connected to a first network device through a first indirect connection path and a first direct connection path is configured as being connected to a second network device through the first direct connection path.

In a possible implementation, a master cell of the remote terminal is changed from being on the first indirect connection path to being on the first direct connection path.

In a possible implementation, the first connection configuration includes that being connected to a first network device through a first indirect connection path and a first direct connection path is configured as being connected to a second network device through a second direct connection path.

In a possible implementation, a master cell of the remote terminal is changed from being on the first indirect connection path to being on the second direct connection path.

In a possible implementation, the first connection configuration includes that being connected to a first network device through a first indirect connection path and a first direct connection path is configured as being connected to a second network device through the first indirect connection path and the first direct connection path.

In a possible implementation, the first connection configuration includes that being connected to a first network device through a first indirect connection path and a first direct connection path is configured as being connected to a second network device through a second indirect connection path and the first direct connection path.

In a possible implementation, a master cell of the remote terminal is changed from being on the first indirect connection path to being on the first direct connection path.

In a possible implementation, the first connection configuration includes that being connected to a first network device through a first indirect connection path and a first direct connection path is configured as being connected to a second network device through the first indirect connection path and a second direct connection path.

In a possible implementation, the first connection configuration includes that being connected to a first network device through a first indirect connection path and a first direct connection path is configured as being connected to a second network device through a second indirect connection path and a second direct connection path.

In a possible implementation, a master cell of the remote terminal is changed from being on the first indirect connection path to being on the second direct connection path.

In a possible implementation, as shown in FIG. 7, the remote terminal 700 may further include:
a first receiving unit 710, configured to receive a first message, where the first message is used to trigger the remote terminal to perform the first connection configuration.

In a possible implementation, the first message is further used to start or restart the first timer.

In a possible implementation, the first message includes a first indication, and the first indication is used to indicate whether the remote terminal is to start or restart the first timer.

In a possible implementation, the first message includes a second indication, and the second indication is used to indicate an identification of the first timer and/or an identification of a second timer used by the remote terminal.

In a possible implementation, at least one of the first timer or the second timer is T304.

In a possible implementation, a condition of stopping the first timer includes at least one of the following:
that the remote terminal completes a random access procedure related to the second direct connection path; or
that the remote terminal receives a second message from the network device, where the second message is used to instruct to release at least one of the following: the second direct connection path, a cell related to the second direct connection path, or a cell group related to the second direct connection path.

In a possible implementation, the processing unit 610 is further configured to: in a case that the first timer expires, perform, by the remote terminal, at least one of the following:
an RRC connection reestablishment process; or
an error reporting process.

In a possible implementation, the error reporting process is triggered when a first condition is met.

In a possible implementation, the first condition includes at least one of the following:
that the remote terminal does not pause transmission on the first indirect connection path and/or the second indirect connection path;
that the remote terminal encounters no radio link failure RLF on the first indirect connection path and/or the second indirect connection path; or
that the second timer of the remote terminal is not in a running state.

In a possible implementation, the second timer is triggered by a switching command or a signal quality indication.

In an implementation, the connection configuration includes a second connection configuration. After the second connection configuration, the remote terminal is connected to the network device through at least an indirect connection path, and the timer includes a third timer.

In a possible implementation, the second connection configuration includes that being connected to a first network device through a first direct connection path is configured as being connected to a second network device through a second direct connection path and a second indirect connection path.

In a possible implementation, a master cell of the remote terminal is located on the second direct connection path or the second indirect connection path.

In a possible implementation, the second connection configuration includes that being connected to a first network device through a first indirect connection path is configured as being connected to a second network device through a second direct connection path and a second indirect connection path.

In a possible implementation, the second connection configuration includes that being connected to a first network device through a first indirect connection path is configured as being connected to a second network device through a second direct connection path and the first indirect connection path.

In a possible implementation, a master cell of the remote terminal is changed from being on the first indirect connection path to being on the second direct connection path.

In a possible implementation, the second connection configuration includes that being connected to a first network device through a first indirect connection path and a first direct connection path is configured as being connected to a second network device through a second indirect connection path.

In a possible implementation, a master cell of the remote terminal is changed from being on the first indirect connection path to being on the second indirect connection path.

In a possible implementation, the second connection configuration includes that being connected to a first network device through a first indirect connection path and a first direct connection path is configured as being connected to a second network device through a first indirect connection path.

In a possible implementation, a master cell of the remote terminal is changed from being located on the first direct connection path to the first indirect connection path.

In a possible implementation, the second connection configuration includes that being connected to a first network device through a first indirect connection path and a first direct connection path is configured as being connected to a second network device through a second indirect connection path and a second direct connection path.

In an implementation, the second connection configuration includes that being connected to a first network device through a first indirect connection path and a first direct connection path is configured as being connected to a second network device through a second indirect connection path and the first direct connection path.

In a possible implementation, a master cell of the remote terminal is changed from being on the first direct connection path to being on the second indirect connection path.

In a possible implementation, the second connection configuration includes that being connected to a first network device through a first indirect connection path and a first direct connection path is configured as being connected to a second network device through the first indirect connection path and the first direct connection path.

In a possible implementation, the second connection configuration includes that being connected to a first network device through a first indirect connection path and a first direct connection path is configured as being connected to a second network device through the first indirect connection path and a second direct connection path.

In a possible implementation, a master cell of the remote terminal is changed from being on the first direct connection path to being on the first indirect connection path.

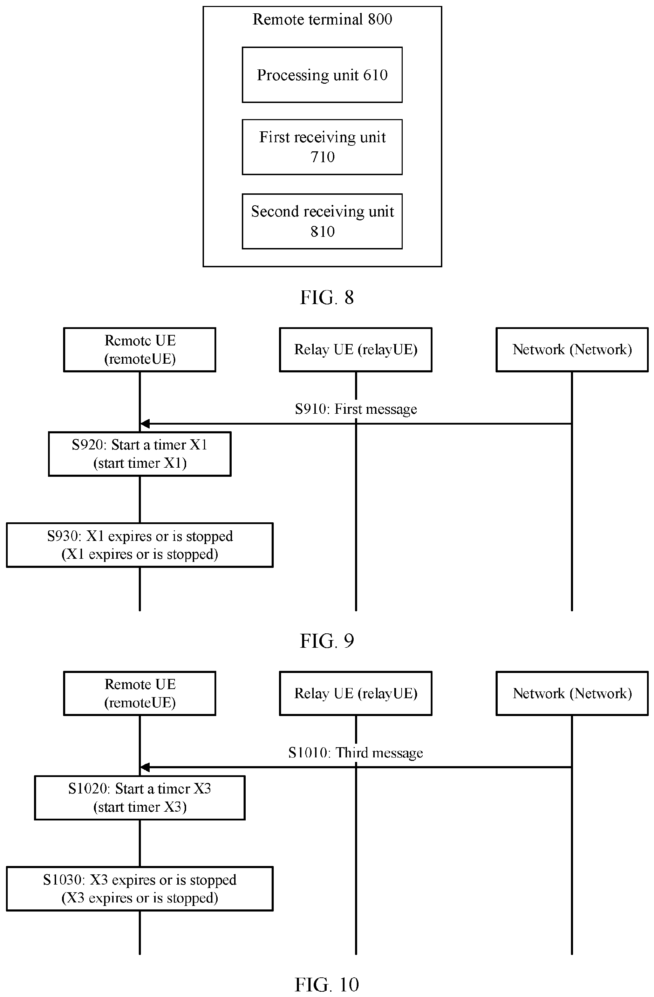

In a possible implementation, as shown in FIG. 8, the remote terminal 800 further includes:
a second receiving unit 810, configured to receive a third message, where the third message is used to trigger the remote terminal to perform the second connection configuration.

In a possible implementation, the third message is further used to start or restart the third timer.

In a possible implementation, the third message includes a third indication, and the third indication is used to indicate whether the remote terminal is to start or restart the third timer.

In a possible implementation, the third message includes a fourth indication, and the fourth indication is used to indicate an identification of the third timer and/or an identification of a fourth timer used by the remote terminal.

In a possible implementation, at least one of the third timer or the fourth timer is T420.

In a possible implementation, a condition of stopping the third timer includes at least one of the following:
that the remote terminal receives a fourth message from a relay terminal, where the fourth message is a PC5-S message;
that the remote terminal receives a fifth message from a relay terminal, where the fifth message is a PC5-RRC message; or
that the remote terminal receives a sixth message from the network device, where the sixth message is used to instruct to release at least one of the following: the second indirect connection path, a cell related to the second indirect connection path, or a cell group related to the second indirect connection path.

In a possible implementation, the PC5-S message is sent by the relay terminal after the relay terminal receives a seventh message from the network device; or
the PC5-RRC message is sent by the relay terminal after the relay terminal receives an eighth message from the network device.

In an implementation, the processing unit 610 is configured to: in a case that the third timer expires, perform, by the remote terminal, at least one of the following:
an RRC connection reestablishment process; or
an error reporting process.

In a possible implementation, the error reporting process is triggered when a second condition is met.

In an implementation, the second condition includes at least one of the following:
that the remote terminal does not pause transmission on the first direct connection path and/or the second direct connection path;
that the remote terminal encounters no RLF on the first direct connection path and/or the second direct connection path; or
that the fourth timer of the remote terminal is not in a running state.

In a possible implementation, the fourth timer is triggered by a switching command or a signal quality indication.

In a possible implementation, the first network device is a source network device, and the second network device is a target network device.

In a possible implementation, the first network device and the second network device are the same cell, the same cell group, or the same device.

In a possible implementation, the first network device and the second network device are different cells, different cell groups, or different devices.

The remote terminals 600, 700, and 800 in embodimentS of this application can implement corresponding functions of the remote terminal in the foregoing method embodiments. For procedures, functions, implementations, and beneficial effects corresponding to modules (submodules, units, components, or the like) in the remote terminals 600, 700, and 800, reference may be made to the corresponding descriptions of the foregoing method embodiments. Details are not described herein again. It should be noted that functions described with respect to the modules (submodules, units, components, or the like) in the remote terminals 600, 700, and 800 in embodiments of this application may be implemented by different modules (submodules, units, components, or the like), or may be implemented by the same module (submodule, unit, component, or the like).

The following describes several specific procedure examples of a connection configuration method according to an embodiment of this application.

Example 1: Remote UE performs a connection configuration for a direct connection path.

For the connection configuration in this example, reference may be made to the first connection configuration in the foregoing embodiment, and it may include operations such as switching, adding, or deleting a path, so that the remote UE is connected to a network device through at least a direct connection path after the first connection configuration is performed.

In this example, the "connection configuration for a direct connection path" may include at least one of the following cases:
The remote UE is originally connected to an original network device through an indirect connection path, and is connected to a target network device through a direct connection path and an indirect connection path after the configuration is performed, where a master cell may be located on the direct connection path or the indirect connection path.

The remote UE is originally connected to an original network device through a direct connection path, and is connected to a target network device through a direct connection path and an indirect connection path after the configuration is performed, where a change occurs in the direct connection path, or a master cell is changed from being located on the direct connection path to being located on the indirect connection path.

The remote UE is originally connected to an original network device through a direct connection path and an indirect connection path, and is connected to a target network device through a direct connection path after the configuration is performed, where a change occurs in the direct connection path, or a master cell is changed from being located on the indirect connection path to being located on the direct connection path.

The remote UE is originally connected to an original network device through a direct connection path and an indirect connection path, and is connected to a target network device through a direct connection path and an indirect connection path after the configuration is performed, where a change occurs in the direct connection path, or a master cell is changed from being located on an indirect connection path to being located on a direct connection path.

In this example, the original network device may be the same as or different from the target network device.

As shown in FIG. 9, the connection configuration process in this example may include the following steps:
S910: A remote UE receives a first message from a network, and triggers a switching procedure towards a target direct connection path. The first message may be used to instruct the UE to perform switching.
S920: The remote UE starts a first timer X1.

In an implementation, the first message includes a first indication, to indicate whether the remote UE needs to start the first timer.

In an implementation, the first timer may be T304.

In an implementation, the first timer may not be T304.

In an implementation, the first message includes a second indication, to indicate an identification of the first timer that the remote UE should use, for example, T304 or another first timer.

S930: The first timer X1 may be stopped or expire as follows:
a. A condition of stopping the first timer includes at least one of the following:
   that the remote UE completes a random access procedure related to the target direct connection path; or
   that the remote UE receives, from the network, a second message for instructing to release a direct connection path, or a cell or a cell group related to a direct connection path.
b. A result of the first timer expiring includes at least one of the following:
   that the remote UE performs an RRC connection reestablishment process; or
   that the remote UE performs an error reporting process to report a failure of the switching process to the network.

In a possible implementation, the error reporting process is triggered on the premise that a first condition is met.

In an implementation, the first condition includes at least one of the following:
that the remote UE does not pause transmission on an indirect connection;
that the remote UE encounters no RLF on an indirect connection; or
that a second timer of the remote UE is not running.

In an implementation, the second timer is triggered by a switching command or a signal quality indication.

In an implementation, the second timer may be started at the same time as the first timer, or may be started independently of the first timer. The second timer may be started based on the first indication and/or the second indication in the first message.

Example 2: Remote UE performs a connection configuration for an indirect connection path.

For the connection configuration in this example, reference may be made to the second connection configuration in the foregoing embodiment, and it may include operations such as switching, adding, or deleting a path, so that the remote UE is connected to a network device through at least an indirect connection path after the second connection configuration is performed.

In this example, the "connection configuration for an indirect connection path" may include at least one of the following cases:
The remote UE is originally connected to an original network device through a direct connection path, and is connected to a target network device through a direct connection path and an indirect connection path after the configuration is performed, where a master cell may be located on the direct connection path or the indirect connection path.

The remote UE is originally connected to an original network device through an indirect connection path, and is connected to a target network device through a direct connection path and an indirect connection path after the configuration is performed, where a change occurs in the indirect connection path, or a master cell is changed from being located on the indirect connection path to being located on the direct connection path.

The remote UE is originally connected to an original network device through a direct connection path and an indirect connection path, and is connected to a target network device through an indirect connection path after the configuration is performed, where a change occurs in the indirect connection path, or a master cell is changed from being located on the direct connection path to being located on the indirect connection path.

The remote UE is originally connected to an original network device through a direct connection path and an indirect connection path, and is connected to a target network device through a direct connection path and an indirect connection path after the configuration is performed, where a change occurs in the indirect connection path, or a master cell is changed from being located on the direct connection path to being located on the indirect connection path.

In this example, the original network device may be the same as or different from the target network device.

As shown in FIG. 10, the connection configuration process in this example may include the following steps:
S1010: A remote UE receives a third message from a network, and triggers a switching procedure towards a target direct connection path. The third message may be used to instruct the remote UE to perform switching.
S1020: The remote UE starts a third timer X3.

In an implementation, the third message includes a third indication, to indicate whether the remote UE needs to start the third timer.

In an implementation, the third timer may be T420.

In an implementation, the third timer may not be T420.

In an implementation, the third message includes a fourth indication, to indicate an identification of the third timer and/or an identification of a fourth timer that the remote UE should use, for example, T420 or another third timer.

S1030: The third timer X3 may be stopped or expire as follows:
a. A condition of stopping the third timer includes at least one of the following:
   that the remote UE receives a fourth message from relay UE, where the message is a PC5-S message;
   that the remote UE receives a fifth message from relay UE, where the message is a PC5-RRC message; or
   that the remote UE receives, from the network, a sixth message for instructing to release an indirect connection path, or a cell or a cell group related to a direct connection path.

Optionally, after receiving a seventh message from the network, the relay UE sends the PC5-S message. Optionally, after receiving a seventh message from the network, the relay UE sends the PC5-RRC message.

b. A result of the third timer expiring includes at least one of the following:
that the remote UE performs an RRC connection reestablishment process;
that the remote UE performs a relay UE reselection process; or
that the remote UE performs an error reporting process to report a failure of the switching process to the network.

In a possible implementation, the error reporting process is triggered on the premise that a second condition is met.

In an implementation, the second condition includes at least one of the following:
that the remote UE does not pause transmission on a direct connection;
that the remote UE encounters no RLF on a direct connection; or
that a fourth timer of the remote UE is not running, and the fourth timer is optionally triggered by a switching command or a signal quality indication.

In an implementation, the fourth timer may be started at the same time as the third timer, or may be started independently of the third timer. The fourth timer may be started based on the first indication and/or the second indication in the third message.

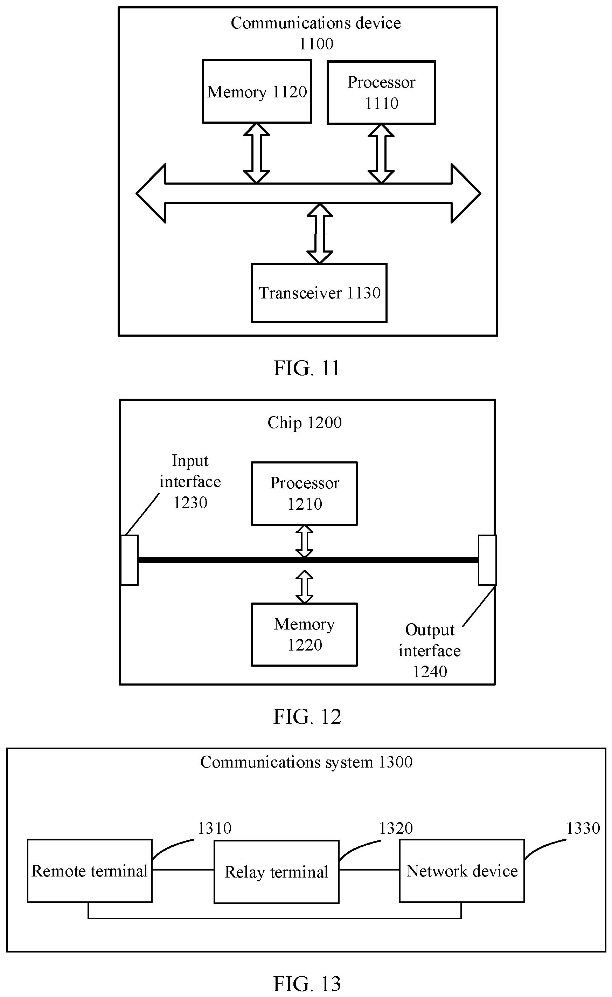

FIG. 11 is a schematic diagram of a structure of a communications device 1100 according to an embodiment of this application. The communications device 1100 includes a processor 1110, and the processor 1110 may invoke a computer program from a memory and run the computer program to cause the communications device 1100 to implement the method in embodiments of this application.

Optionally, the communications device 1100 may further include a memory 1120. The processor 1110 may invoke a computer program from the memory 1120 and run the computer program to cause the communications device 1100 to implement the method in embodiments of this application.

The memory 1120 may be a separate component independent of the processor 1110 or may be integrated into the processor 1110.

Optionally, the communications device 1100 may further include a transceiver 1130. The processor 1110 may control the transceiver 1130 to communicate with another device. Specifically, the transceiver 1130 may send information or data to the other device, or receive information or data sent by the other device.

The transceiver 1130 may include a transmitter and a receiver. The transceiver 1130 may further include an antenna. There may be one or more antennas.

Optionally, the communications device 1100 may be specifically the remote terminal in embodiments of this application, and the communications device 1100 may implement a corresponding procedure implemented by the remote terminal in the method in embodiments of this application. For brevity, details are not described herein again.

FIG. 12 is a schematic diagram of a structure of a chip 1200 according to an embodiment of this application. The chip 1200 includes a processor 1210, and the processor 1210 can invoke a computer program from a memory and run the computer program, to implement the method in embodiments of this application.

Optionally, the chip 1200 may further include a memory 1220. The processor 1210 may invoke a computer program from the memory 1220 and run the computer program, to implement the method performed by the remote terminal in embodiments of this application.

The memory 1220 may be a separate component independent of the processor 1210 or may be integrated into the processor 1210.

Optionally, the chip 1200 may further include an input interface 1230. The processor 1210 may control the input interface 1230 to communicate with another device or chip, and specifically, may obtain information or data transmitted by the other device or chip.

Optionally, the chip 1200 may further include an output interface 1240. The processor 1210 may control the output interface 1240 to communicate with another device or chip, and specifically, may output information or data to the other device or chip.

Optionally, the chip may be applied to the remote terminal in embodiments of this application, and the chip may implement a corresponding procedure implemented by the remote terminal in the method in embodiments of this application. For brevity, details are not described herein again.

It should be understood that the chip mentioned in this embodiment of this application may also be referred to as a system-level chip, a system chip, a chip system, a system-on-chip, or the like.

The processor mentioned above may be a general-purpose processor, a digital signal processor (digital signal processor, DSP), a field programmable gate array (field programmable gate array, FPGA), an application specific integrated circuit (application specific integrated circuit, ASIC), or another programmable logic device, a transistor logic device, a discrete hardware component, or the like. The general-purpose processor mentioned above may be a microprocessor, or may be any conventional processor or the like.

The memory mentioned above may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM).

It should be noted that the foregoing memory is an example and non-limiting description. For example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), or the like. In other words, the memory in this embodiment of this application is intended to include but not be limited to these and any other appropriate types of memories.

FIG. 13 is a schematic block diagram of a communications system 1300 according to an embodiment of this application. The communications system 1300 includes a remote terminal 1310, a relay terminal 1320, and a network device 1330. The remote terminal 1310 may be directly connected to the network device 1330, or may be connected to the network device 1330 through the relay terminal 1320.

The remote terminal is configured to perform a connection configuration based on a timer, where the connection configuration includes a connection configuration related to at least two paths, and the at least two paths include a direct connection path and an indirect connection path.

The remote terminal 1310 may be configured to implement corresponding functions implemented by the remote terminal in the foregoing method, and the network device 1330 may be configured to implement corresponding functions implemented by the network device in the foregoing method. For brevity, details are not described herein again.

Some or all of the foregoing embodiments may be implemented by using software, hardware, firmware, or any combination thereof. When software is used to implement embodiments, some or all of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (Digital Subscriber Line, DSL)) manner or a wireless (such as infrared, wireless, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, reference may be made to corresponding processes in the foregoing method embodiments. Details are not described herein again.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A connection configuration method (300), comprising:
performing (S310), by a remote terminal, a connection configuration based on a timer, wherein the connection configuration comprises a connection configuration related to at least two paths, and the at least two paths comprise a direct connection path and an indirect connection path;
wherein the connection configuration comprises a second connection configuration, the remote terminal is connected to a network device through at least the indirect connection path after the second connection configuration is performed, and the timer comprises a third timer;
the second connection configuration comprises that being connected to a first network device through a first direct connection path is configured as being connected to a second network device through the first direct connection path and a second indirect connection path; or
the second connection configuration comprises that being connected to a first network device through a first indirect connection path and a first direct connection path is configured as being connected to a second network device through a second indirect connection path and the first direct connection path;
**characterized in that**:
the method further comprises:
when the third timer expires, performing, by the remote terminal, an error reporting process;
wherein the error reporting process is triggered when a second condition is met, and
wherein the second condition comprises that the remote terminal does not pause transmission on the first direct connection path.

2. The method (300) according to claim 1, wherein the method further comprises:
receiving, by the remote terminal, a third message, wherein the third message is used to trigger the remote terminal to perform the second connection configuration.

3. The method (300) according to claim 2, wherein the third message is further used to start or restart the third timer.

4. The method (300) according to any one of claims 1 to 3, wherein a condition of stopping the third timer comprises that the remote terminal receives a fifth message from a relay terminal, wherein the fifth message is a PC5 Radio Resource Control, PC5-RRC, message.

5. The method (300) according to claim 1, wherein the first network device is a source network device, and the second network device is a target network device.

6. The method (300) according to claim 5, wherein the first network device and the second network device are the same device.

7. A communications device (1100), comprising a processor (1110) and a memory (1120), wherein the memory (1120) is configured to store a computer program, and the processor (1110) is configured to invoke and run the computer program stored in the memory (1120), to cause the communications device (1100) to perform the method according to any one of claims 1 to 6.

## Patentansprüche

1. Verbindungskonfigurationsverfahren (300), das Folgendes umfasst:
Durchführen (S310), durch ein entferntes Endgerät, einer Verbindungskonfiguration basierend auf einem Timer, wobei die Verbindungskonfiguration eine Verbindungskonfiguration umfasst, die sich auf mindestens zwei Pfade bezieht, und die mindestens zwei Pfade einen direkten Verbindungspfad und einen indirekten Verbindungspfad umfassen;
wobei die Verbindungskonfiguration eine zweite Verbindungskonfiguration umfasst, das entfernte Endgerät über mindestens den indirekten Verbindungspfad mit einem Netzwerkgerät verbunden ist, nachdem die zweite Verbindungskonfiguration durchgeführt wurde, und der Timer einen dritten Timer umfasst;
wobei die zweite Verbindungskonfiguration umfasst, dass das Verbinden mit einem ersten Netzwerkgerät über einen ersten direkten Verbindungspfad als mit einem zweiten Netzwerkgerät über den ersten direkten Verbindungspfad und einen zweiten indirekten Verbindungspfad verbunden konfiguriert ist; oder
wobei die zweite Verbindungskonfiguration umfasst, dass das Verbinden mit einem ersten Netzwerkgerät über einen ersten indirekten Verbindungspfad und ein erster direkter Verbindungspfad als Verbinden mit einem zweiten Netzwerkgerät über einen zweiten indirekten Verbindungspfad und den ersten direkten Verbindungspfad konfiguriert ist;
**dadurch gekennzeichnet, dass**:
das Verfahren ferner Folgendes umfasst:
wenn der dritte Timer abläuft, Durchführen, durch das entfernte Endgerät, eines Fehlerberichtsprozesses;
wobei der Fehlerberichtsprozess ausgelöst wird, wenn eine zweite Bedingung erfüllt ist, und
wobei die zweite Bedingung umfasst, dass das entfernte Endgerät die Übertragung auf dem ersten direkten Verbindungspfad nicht unterbricht.

2. Verfahren (300) nach Anspruch 1, wobei das Verfahren ferner Folgendes umfasst:
Empfangen, durch das entfernte Endgerät, einer dritten Nachricht, wobei die dritte Nachricht verwendet wird, um das entfernte Endgerät zu veranlassen, die zweite Verbindungskonfiguration durchzuführen.

3. Verfahren (300) nach Anspruch 2, wobei die dritte Nachricht ferner verwendet wird, um den dritten Timer zu starten oder neu zu starten.

4. Verfahren (300) nach einem der Ansprüche 1 bis 3, wobei eine Bedingung zum Stoppen des dritten Timers umfasst, dass das entfernte Endgerät eine fünfte Nachricht von einem Relaisendgerät empfängt, wobei die fünfte Nachricht eine Nachricht über eine PC5-Funkressourcensteuerung (PC5-RRC) ist.

5. Verfahren (300) nach Anspruch 1, wobei das erste Netzwerkgerät ein Quellnetzwerkgerät ist und das zweite Netzwerkgerät ein Zielnetzwerkgerät ist.

6. Verfahren (300) nach Anspruch 5, wobei das erste Netzwerkgerät und das zweite Netzwerkgerät das gleiche Gerät sind.

7. Kommunikationsvorrichtung (1100), umfassend einen Prozessor (1110) und einen Speicher (1120), wobei der Speicher (1120) dazu ausgelegt ist, ein Computerprogramm zu speichern, und der Prozessor (1110) dazu ausgelegt ist, das in dem Speicher (1120) gespeicherte Computerprogramm aufzurufen und auszuführen, um zu bewirken, dass die Kommunikationsvorrichtung (1100) das Verfahren nach einem der Ansprüche 1 bis 6 durchführt.

## Revendications

1. Procédé (300) de configuration de connexion, comprenant :
la réalisation (S310), par un terminal distant, d'une configuration de connexion sur la base d'un temporisateur, la configuration de connexion comprenant une configuration de connexion relative à au moins deux chemins, et les au moins deux chemins comprenant un chemin de connexion direct et un chemin de connexion indirect ;
la configuration de connexion comprenant une deuxième configuration de connexion, le terminal distant étant connecté à un dispositif de réseau par l'intermédiaire au moins du chemin de connexion indirect après que la deuxième configuration de connexion a été réalisée, et le temporisateur comprenant un troisième temporisateur ;
la deuxième configuration de connexion comprenant qu'une connexion à un premier dispositif de réseau par l'intermédiaire d'un premier chemin de connexion direct est configurée comme une connexion à un deuxième dispositif de réseau par l'intermédiaire du premier chemin de connexion direct et d'un deuxième chemin de connexion indirect ; ou
la deuxième configuration de connexion comprenant qu'une connexion à un premier dispositif de réseau par l'intermédiaire d'un premier chemin de connexion indirect et d'un premier chemin de connexion direct est configurée comme une connexion à un deuxième dispositif de réseau par l'intermédiaire d'un deuxième chemin de connexion indirect et du premier chemin de connexion direct ;
**caractérisé en ce que** :
le procédé comprend en outre :
à l'expiration du troisième temporisateur, la réalisation, par le terminal distant, d'un processus de signalement d'erreur ;
le processus de signalement d'erreur étant déclenché lorsqu'une deuxième condition est remplie, et
la deuxième condition comprenant que le terminal distant ne suspend pas la transmission sur le premier chemin de connexion direct.

2. Procédé (300) selon la revendication 1, le procédé comprenant en outre :
la réception, par le terminal distant, d'un troisième message, le troisième message étant utilisé pour déclencher la réalisation, par le terminal distant, de la deuxième configuration de connexion.

3. Procédé (300) selon la revendication 2, dans lequel le troisième message est en outre utilisé pour démarrer ou redémarrer le troisième temporisateur.

4. Procédé (300) selon l'une quelconque des revendications 1 à 3, dans lequel une condition d'arrêt du troisième temporisateur comprend que le terminal distant reçoit un cinquième message provenant d'un terminal relais, le cinquième message étant un message de contrôle des ressources radio PC5, PC5-RRC.

5. Procédé (300) selon la revendication 1, dans lequel le premier dispositif de réseau est un dispositif de réseau source, et le deuxième dispositif de réseau est un dispositif de réseau cible.

6. Procédé (300) selon la revendication 5, dans lequel le premier dispositif de réseau et le deuxième dispositif de réseau sont le même dispositif.

7. Dispositif de communication (1100), comprenant un processeur (1110) et une mémoire (1120), la mémoire (1120) étant configurée pour stocker un programme d'ordinateur, et le processeur (1110) étant configuré pour appeler et exécuter le programme d'ordinateur stocké dans la mémoire (1120) afin d'amener le dispositif de communication (1100) à réaliser le procédé selon l'une quelconque des revendications 1 à 6.
